# EUROPEAN PATENT APPLICATION

(11) **EP 2 398 234 A1**
(43) Date of publication of application: **21.12.2011**
(21) Application number: 10189999.5
(22) Date of filing: 04.11.2010
(51) Int. Cl.: H04N 5/64, G06F 1/16

(54) **Display device**

(30) Priority: 11.06.2010 TW 099119032
(71) Applicant: Hannspree, Inc., Taipei (TW)
(72) Inventor: Huang, Wen-Hung, 248, Wugu Industrial Zone (TW); Hsieh, Kuan-Cheng, 248, Wugu Industrial Zone (TW); Chiu, Yi-Chung, 248, Wugu Industrial Zone (TW)
(74) Representative: Viering, Jentschura & Partner

(57) **Abstract**

A display device comprises a case and a display panel module. The case includes a front bezel and a back bezel combined with each other to define an accommodating space in the case, and the case further includes a window located on the front bezel. The display panel module includes a display screen, and the display panel module is disposed inside the case, wherein the display screen faces the window and an included angle is defined between the display screen and the front bezel. The included angle is between 3 to 5 degrees, when the display device is tilted a small angle backward, the included angle between the display screen and the front bezel make the display screen to be substantially perpendicular to a surface on witch the display device is placed thereon, such that the display screen is perpendicular to the line of the sight of a user.

## Description

### BACKGROUND OF THE INVENTION

### Technical Field

The present invention relates to a display device, and more particularly to a display device with a display screen perpendicular to a surface when being placed obliquely.

### Related Art

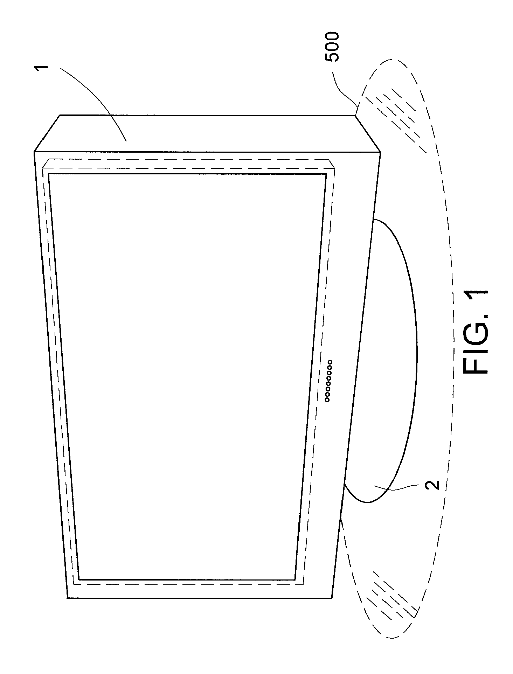

Please refer to FIG. 1, when a large flat panel display device 1 in the prior art is placed on a surface 500, the display device 1 has to be supported by a base 2, which provides a stable disposing foundation by means of a large-area contact between the base 2 and the surface 500, as so to support the display device 1 on the surface 500.

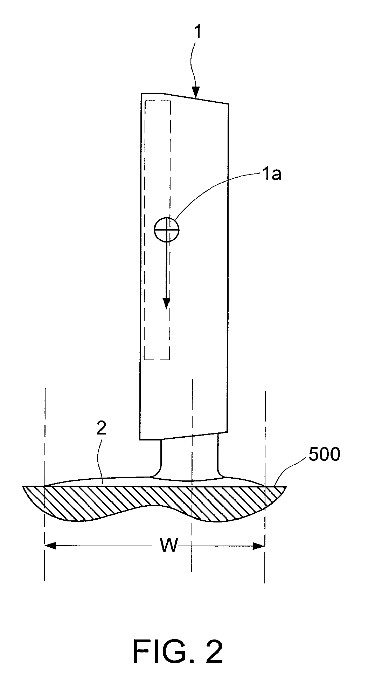

However, as shown in FIG. 2, in order to prevent the display device 1 from tipping-over, the base 2 must extend both towards the front side and the back side of the display device 1 to a particular width W to prevent a projection of a center of gravity 1a of the display device 1 on the surface 500 from moving outside the base 2 when the display device 1 is titled back and forth. Therefore, when placing the conventional large display device, a large area must be reserved on the surface 500 for placing the base 2 with a size sufficiently large to prevent the display device from tipping-over. The base 2 occupies a considerable extra space, and is not pleasant to look at.

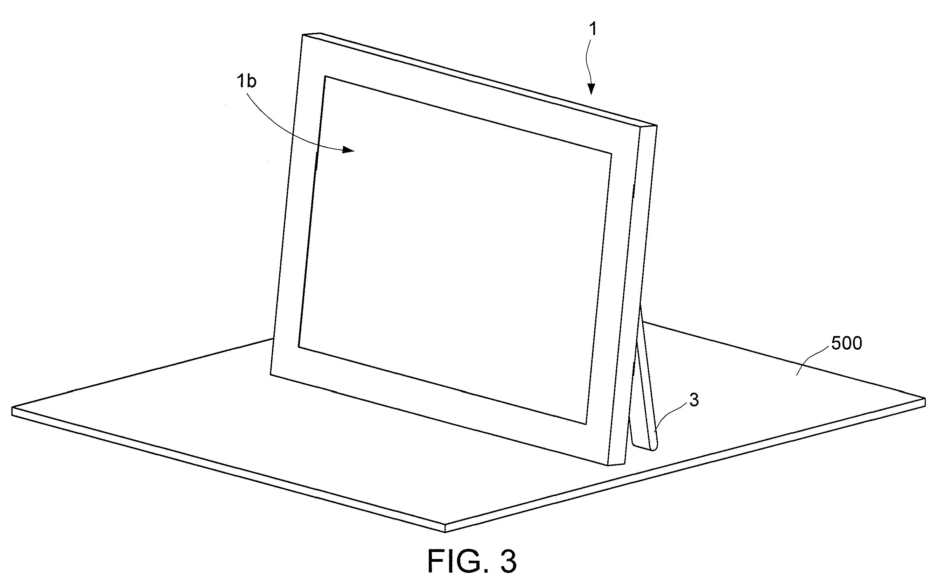

As shown in FIG. 3, another method for supporting the display device 1 is mainly used on small displays, such as a small-sized TV set or digital photo frame, in which a bracket 3 is disposed on the back bezel of the display device 1. The display device 1 is disposed on the surface 500 by tilting backwards, and the bracket 3 also contacts the surface 500 to support the display device 1.

The supporting method as shown in FIG. 3 is relatively simple, which is suitable for a small display. However, the tilting backwards of the display device 1 also causes a display screen 1b to be tilted backwards, so that a user cannot directly view the display screen 1b from an angle perpendicular to the display screen 1b. On a current flat panel display, the display screen 1b has a preferred viewing angle range, in which the best viewing direction toward the display screen 1b is the direction perpendicular to the display screen 1b. The supporting method as shown in FIG. 3 causes the display screen 1b to be tilted backwards, and thus it is not easy for the user to view the display screen 1b along viewing direction perpendicular to the display screen 1b. In this case, to obtain a better viewing angle, the user must view the display screen 1b with a relatively uncomfortable posture, such as looking downward towards the display screen 1b from a high position.

### SUMMARY

In view of the abovementioned problem, the present invention is directed to a display device which does not equipped with a large-sized base occupying a large area, and prevents a poor viewing angle resulting from the tilting forwards and backwards of the display device.

The display device of the present invention comprises a case and a display panel module.

The case comprises a front bezel and a back bezel combined with each other, and includes a window located on the front bezel.

The display panel module is provided to display images generated by an electronic device and includes a display screen. The display panel module is disposed in the case with the display screen facing the window. An included angle of 3 to 5 degrees is defined between the display panel module and the front bezel.

When the display is placed or supported by tilting backwards, if the tilting angle of the front bezel equals the included angle between the display screen and the front bezel, the display screen will be perpendicular to a surface.

In the display device of the present invention, a supporting force is provided by a support with a small area from a back side of the case, so as to maintain the forward and backward tilting angle of the display device, instead of using a large-sized base occupying a large area to support the display, such that the space for disposing the display device is reduced. The display device can be optionally wall-mounted or disposed on the surface, and after the display tilts backwards to a small degree, the display screen is approximately perpendicular to the surface due to the included angle between the display screen and the front bezel of the case. Therefore, the display screen is nearly perpendicular to the line of the sight of a user, and the user can have the best viewing direction toward display screen.

### BRIEF DESCRIPTION OF THE DRAWINGS

The present invention will become more fully understood from the detailed description given herein below for illustration only, and thus are not limitative of the present invention, wherein:
FIG. 1 is a perspective view of a display device in the prior art, in which the display device is disposed on a base;
FIG. 2 is a lateral view showing the display device and the base in the prior art;
FIG. 3 is a perspective view of the display device in the prior art, in which the display device is obliquely disposed on a surface;
FIG. 4 and FIG. 5 are perspective views according to an embodiment of the present invention;
FIG. 6 is a cross-sectional view according to the embodiment of the present invention;
FIG. 7 is a cross-sectional view of a support according to the embodiment of the present invention; and
FIG. 8 is a cross-sectional view of a cam according to the embodiment of the present invention.

### DETAILED DESCRIPTION

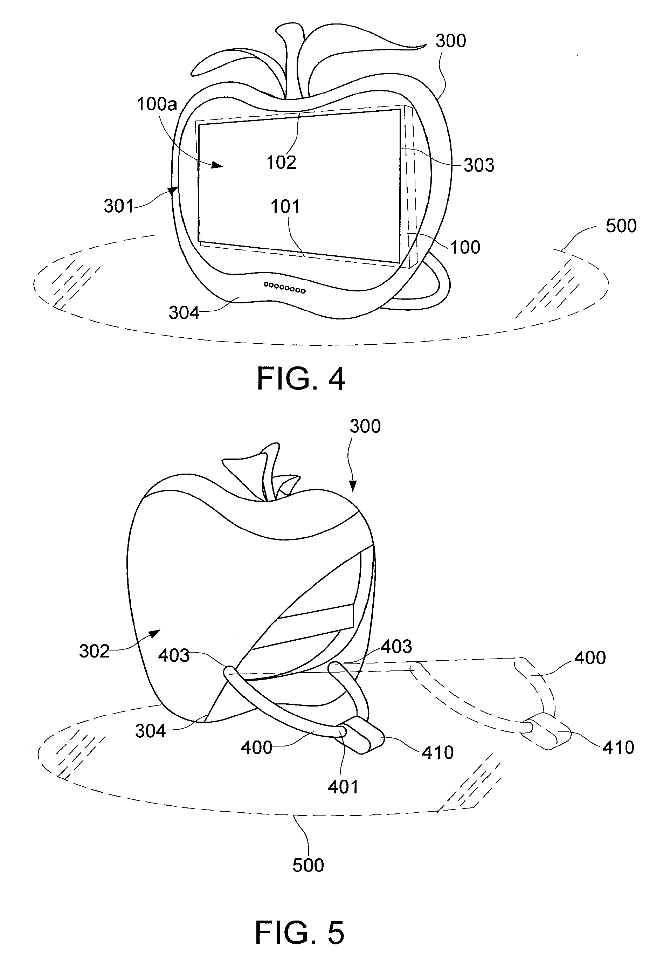

Please refer to FIG. 4 and FIG. 5, in which a display device according to an embodiment of the present invention is provided for display images generated by an electronic device. The display device comprises a display panel module 100 and a case 300. The display panel module 100 includes a display screen 100a, and the display panel module 100 is disposed inside the case 300.

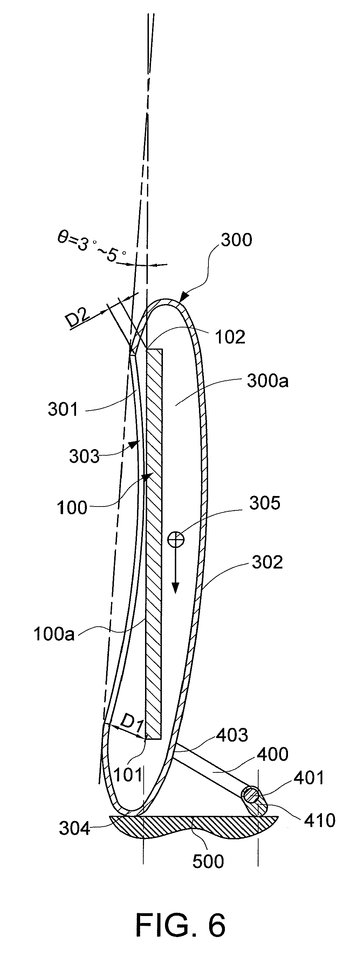

Please refer to FIG. 4 and FIG. 6. The case 300 includes a front bezel 301 and a back bezel 302 combined with each other, and accommodation space 300a is defined inside the case 300. The case 300 includes a window 303, which is located on the front bezel 301 and in communication with the accommodation space 300a.

Please refer to FIG. 4 to FIG. 6. The case 300 further includes a base portion 304, which connects the front bezel 301 to the back bezel 302. The base portion 304 contacts a surface 500 to support the case 300 on the surface 500.

Please refer to FIG. 4 and FIG. 6. The display panel module 100 is used to display images generated by the electronic device. The display panel module 100 is disposed in the accommodation space 300a of the case 300, and the display screen 100a faces the window 303. So that the display screen 100a of the display panel module 100 is exposed on the front bezel 301 via the window 303. An included angle *θ* is defined between the display screen 100a and the front bezel 301, and the included angle *θ* is between 3 to 5 degrees. Thus, when the front bezel 301 of the case 300 is tilted backward on the surface 500, the display screen 100a of the display panel module 100 is perpendicular to the surface 500.

As shown in FIG. 6, the display screen 100a of the display panel module 100 has a lower edge 101 corresponding to the base portion 304 and an upper edge 102 opposite to the lower edge 101. The lower edge 101 of the display screen 100a is defined as an axis of rotation, and thus the display panel module 100 of the display screen 100a is made to be tilted towards the outside of the window 303 by rotated about the lower edge 101 as the axis of rotation. Therefore, a distance D1 from the lower edge 101 of the display screen 100a to a bottom edge of the window 303 is larger than a distance D2 from the upper edge 102 of the display screen 100a to an top edge of the window 303, so that the specific included angle *θ* is defined between the display panel module 100 and the front bezel 301.

As shown in FIG. 6, when the display device is placed on the surface 500, such as a top of a table, the base portion 304 of the case 300 contacts the surface 500 and supports the case 300 on the surface 500. At this time, if the case 300 is tilted towards the back bezel 302, and the tilting angle of the front bezel 301 equals the specific included angle *θ* between the display screen 100a and the front bezel 301, the display screen 100a is nearly perpendicular to the surface 500, so as to provide a user with a better viewing direction toward display screen 100a.

Please refer to FIG. 5 and FIG. 6, the display device of the present invention further includes a support 400, and the support 400 includes a pivot portion 401 and a joint portion 403.

The joint portion 403 is permanently or detachably connected to the back bezel 302 of the case 300, and the pivot portion 401 extends away from the back bezel 302. The pivot portion 401 is adapted to contact the surface 500 to support the case 300 on the surface 500, such that the case 300 keeps oblique angle to the surface 500 instead of tilting towards the back bezel 302.

Please refer to FIG. 5 and FIG. 6, in which the support 400 in this embodiment is a U-shaped stand. Two ends of the bent bar serve as the joint portion 403 of the support 400, which is connected to the back bezel 302 of the case 300 through insertion, and a middle section of the stand serves as the pivot portion 401. The stand is one of the various implementing aspects of the support 400, but is not used to limit the configuration of support 400 of the present invention. The support 400 may also be of other types, such as a cylinder, a plate, a rectangular frame, or an H-shape frame.

Please refer to FIG. 6, in which a relative position between the support 400 and the back bezel 302 is determined according to the following principles. When the base portion 304 and the pivot portion 401 contact the surface 500 to support the display device, a projection of a center of gravity 305 of the display device on the surface 500 falls between the base portion 304 and the bearing portion 401, so that the display device is tilted backwards under the effect of gravity. At this time, with a supporting function of the bearing portion 401, the display device can be supported without tilting forwards.

Most importantly, it is better to maintain the included angle *θ* between the front bezel 301 and the display panel module 100 between 3 to 5 degrees. This ensures that the projection of the center of gravity 305 on the surface 500 falls between the base portion 304 and the bearing portion 401. Meanwhile, the display panel module 100 occupies the smallest possible space inside the case while the whole display device can be supported by the support 400.

If the included angle *θ* between the front bezel 301 and the display panel module 100 is too large, the center of gravity 305 will move backwards too far; as a result, the projection of the center of gravity 305 on the surface 500 can only be maintained between the base portion 304 and the pivot portion 401 by using a longer support 400. Meanwhile, if the included angle *θ* between the front bezel 301 and the display screen 100a is too large, a thickness of the case 300 (a distance between the front bezel 301 and the back bezel 302), must be increased significantly in order to dispose the display panel module 100 in the case 300. As a result, in the display device of this embodiment, the specific included angle *θ* between the front bezel 301 and the display screen 100a is preferably between 3 to 5 degrees, and the projection of the center of gravity 305 on the surface can be maintained between the base portion 304 and the pivot portion 401 without increasing unnecessarily the thickness of the case 300. In addition, a distance between the joint portion 403 of the support 400 and the base portion 304 is between 1/5 to 1/7 of a height of the case 300, and a length of the support 400 may also be shortened. Moreover, when the display is wall-mounted instead of being disposed on the surface 500, the support 400 may also be detached from the back bezel 302.

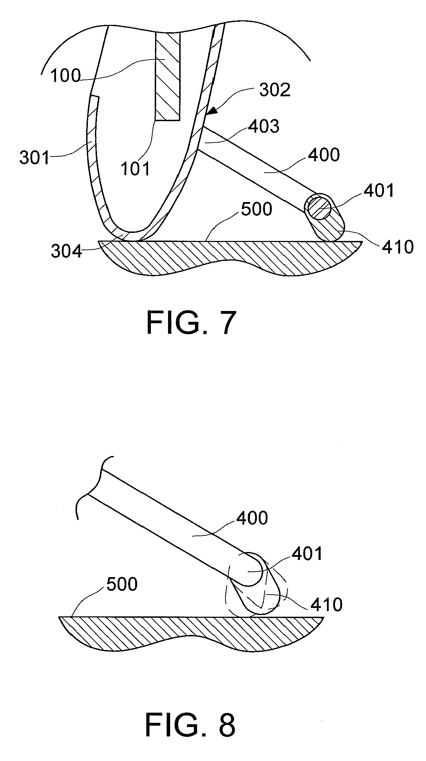

Please refer to FIG. 7 and FIG. 8, in order to slightly adjust the angle of the display relative to the surface 500, an embodiment of the present invention further provides a cam 410, pivoted eccentrically to the pivot portion 401 of the support 400. The pivot portion 401 indirectly contacts the surface 500 via the cam 410. With the rotation of the cam 410 relative to the pivot portion 401, a height of the pivot portion 401 relative to the surface 500 also changes, such that the tilting angle of the display device is slightly adjusted the tilting angle of the display device relative to the surface 500. The cam 410 is approximately a rectangular cylinder or an elliptic cylinder, and is pivoted eccentrically to the support 400 with the pivot portion 401 as its axle center.

The display device of the present invention tilts backwards; therefore, the support 400 need only provide a supporting force from the back side of the case 300 in order to maintain the backward tilting angle of the case 300. Since the display tilts backwards, the display is prevented from tilting forwards under the effect of gravity, and thus the support 400 does not need to extend to the front side of the case 300. Compared with the base of the display device in the prior art, the display device of the present invention does not occupy the surface 500 in front of the case 300, and the space required for disposing the display device is reduced. Regardless of whether the display is wall-mounted or disposed on the surface 500, after the display device tilts backwards a small degree, the display device is roughly parallel to a plumb line (approximately perpendicular to the surface 500), due to the included angle between the display panel module 100 and the front bezel 301 of the case 300, such that the user can view the display panel module 100 from a perpendicular angle and maintain the best viewing direction toward the display screen 100a.

While the present invention has been described by the way of example and in terms of the preferred embodiments, it is to be understood that the invention need not to be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

### List of reference numerals

- 1: display device
- 1a: center of gravity
- 1b: display screen
- 2: base
- 3: bracket
- 100: display panel module
- 100a: display screen
- 101: lower edge
- 102: upper edge
- 300: case
- 300a: accommodation space
- 301: front bezel
- 302: back bezel
- 303: window
- 304: base portion
- 305: center of gravity
- 400: support
- 401: pivot portion
- 403: joint portion
- 410: cam
- 500: surface
- *θ*: included angle
- D1/D2: distance

## Claims

1. A display device for displaying images generated by an electronic device, comprising a case (300), including a front bezel (301) and a back bezel (302) combined with each other, and a window (303) located on the front bezel (301); and a display panel module (100), arranged to display images generated by the electronic device, including a display screen (100a), wherein the display device is **characterized in that**:
the display panel module (100) is disposed inside the case (300) with the display screen (100a) facing the window (303), an included angle ( *θ* ) is defined between the display screen (100a) and the front bezel (301), and the included angle ( *θ* ) is between 3 to 5 degrees.

2. The display device as claimed in claim 1, wherein the case (300) has a base portion (304), connecting the front bezel (301) to the back bezel (302), for contacting a surface (500) to support the case (300) on the surface (500).

3. The display device as claimed in claim 2, wherein the display screen (100a) includes a lower edge (101) corresponding to the base portion (304) and an upper edge (102) opposite to the lower edge (101), and the display screen (100a) is made to be tilted towards the outside of the window (303) by being rotated about the lower edge (101) as an axis of rotation.

4. The display device as claimed in claim 2, wherein the display screen (100a) has a lower edge (101) corresponding to the base portion (304) and an upper edge (102) opposite to the lower edge (101), the window (303) has a bottom edge corresponding to the base portion (304) and a top edge opposite the bottom edge, and a distance from the lower edge (101) of the display screen (100a) to the bottom edge of the window (303) is larger than a distance from the upper edge of the display screen (100a) to the top edge of the window (303).

5. The display device as claimed in claim 2, further comprising a support (400), wherein the support (400) comprises:
a joint portion (403), connected to the back bezel (302) of the case (300); and
a pivot portion (401), extending away from the back bezel (302).

6. The display device as claimed in claim 5, wherein the joint portion (403) is detachably connected to the back bezel (302) of the case (300).

7. The display device as claimed in claim 5, wherein the support (400) is a U-shaped stand, two ends of the U-shaped stand are connected to the back bezel (302) to serve as the joint portion (403), and a middle section of the bent bar serve as the pivot portion (401).

8. The display device as claimed in claim 5, wherein a distance between the joint portion (403) of the support (400) and the base portion (304) is between 1/5 to 1/7 of a height of the case (300).

9. The display device as claimed in claim 5, further comprising a cam (410), pivoted eccentrically to the pivot portion (401) of the support (400).

10. The display device as claimed in claim 5, wherein the display has a center of gravity (305), and a projection of the center of gravity (305) on the surface (500) falls between the base portion (304) and the pivot portion (401).
